# EUROPÄISCHE PATENTANMELDUNG

(11) **EP 3 300 570 A2**
(43) Veröffentlichungstag der Anmeldung: **04.04.2018**
(21) Anmeldenummer: 17401099.1
(22) Anmeldetag: 24.08.2017
(51) Int. Cl.: A01C 17/00, A01C 21/00, A01B 79/00

(54) **LANDWIRTSCHAFTLICHES FAHRZEUG**

(30) Priorität: 28.09.2016 DE 102016118289
(71) Anmelder: Amazonen-Werke H. Dreyer GmbH & Co. KG, 49205 Hasbergen (DE)
(72) Erfinder: Kötter, Heiner, 49086 Osnabrück (DE); Meyer zu Hoberge, Jörg, 49492 Westerkappeln (DE)

(57) **Zusammenfassung**

Vorgestellt wird ein landwirtschaftliches Fahrzeug (1) mit einer Streuvorrichtung (2), die ihrerseits einen das auszubringende Streumittel aufnehmenden Vorratsbehälter (3) mit einer Dosiereinrichtung (4) zur einstellbaren Abgabe der Menge des Streumittels an ein der Dosiereinrichtung (4) zugeordnetes Streuwerk (5) aufweist, wobei das Streuwerk (5) mindestens eine angetriebene Streuscheibe (6) umfasst und die Neigung (α) der über eine gelenkartige Kupplung (7) mit dem Fahrzeug (1) mechanisch verbundenen Streuvorrichtung (2) in Relation zu einer horizontalen Ebene (8) mittels wenigstens eines, die Streuvorrichtung (2) mit dem Fahrzeug (1) koppelnden Hydraulikzylinders (9) einstellbar ist.

Die erfindungsgemäße Besonderheit ist darin zu sehen, dass an dem Fahrzeug (1) eine Datenerzeugungseinrichtung (10) zur Erzeugung topografischer Oberflächeninformationen des mit dem Streumittel zu versehenden, in Fahrtrichtung des Fahrzeugs (1) betrachtet, vor und/oder seitlich neben dem Fahrzeug (1) vorhandenen Untergrundes (11) vorhanden ist, deren Daten mittels eines Bordcomputers (12) zur adaptiven Ansteuerung des Hydraulikzylinders (9) und/oder einer Höheneinstelleinrichtung des Fahrwerkes des Fahrzeuges (1) und/oder des Streuwerkes (5) und/oder der wenigstens einen Streuscheibe (6) nutzbar sind.

## Beschreibung

Die Erfindung betrifft ein landwirtschaftliches Fahrzeug nach dem Oberbegriff des Patentanspruches 1 und 12.

Ein derartiges landwirtschaftliches Fahrzeug weist eine Streuvorrichtung auf, die ihrerseits über einen das auszubringende Streumittel aufnehmenden Vorratsbehälter mit einer Dosiereinrichtung zur einstellbaren Abgabe der Menge des Streumittels an ein der Dosiereinrichtung zugeordnetes Streuwerk verfügt. Die Streuvorrichtung kann dabei einerseits als ein von dem Fahrzeug gezogener Anhänger ausgeführt oder unmittelbar an dem Fahrzeug befestigt sein. Wesentlicher Bestandteil des Streuwerkes ist mindestens eine angetriebene Streuscheibe, wobei bevorzugt mehrere Streuscheiben vorhanden sind. Diese Streuscheiben haben die Aufgabe, das Streugut gleichmäßig zu verteilen und somit ein konstantes Streubild zu erzeugen. Bei dem erwähnten Streugut kann es sich beispielsweise um Dünger, Kalk oder Pflanzenschutzmittel handeln, deren Ausbringung auf landwirtschaftlichen Flächen aus ökonomischen und ökologischen Gründen optimiert sein muss. Anders ausgedrückt bedeutet dies, dass, auf eine Flächeneinheit bezogen, weder zu viel, noch zu wenig des Streumittels verteilt werden darf. Wird zu wenig Streumittel ausgebracht, so tritt die gewünschte Wirkung nicht ein. Eine lokal zu dichte Ausbringung des Streumittels kann hingegen sowohl die landwirtschaftliche Fläche, als auch die darauf wachsenden Pflanzen beziehungsweise sogar das Grundwasser in Mitleidenschaft ziehen. Diese negativen Wirkungen sind daher unbedingt zu vermeiden, weshalb auf ein gleichmäßiges Streubild Wert gelegt wird. Vor Beginn der Ausbringung des Streumittels erfolgt daher zunächst eine exakte Einstellung der Streuscheiben, so dass sich das erwähnte, gleichmäßige Streubild ergibt. Dennoch kann sich das Streubild während der Bearbeitung der landwirtschaftlichen Fläche verändern, wenn beispielsweise das Beladungsgewicht des Vorratsbehälters proportional zu bereits verteilten Menge des Streumittels abnimmt. Daraus kann sich eine unerwünschte Neigung der Streuscheiben entgegen ihrer ursprünglichen Einstellung ergeben, so dass eine Korrektur erforderlich wird. Andere Einflüsse sind beispielsweise Unebenheiten des Untergrundes, also zum Beispiel ein bergiges Gelände, ein sich durch die Entladung ändernder Reifenluftdruck des landwirtschaftlichen Fahrzeugs, das Frontgewicht des Fahrzeugs und/oder der Bodenzustand im Allgemeinen.

Ein landwirtschaftliches Fahrzeug der betroffenen Art ist beispielsweise aus der EP 2 732 686 A1 bekannt. In dieser Schrift wird das Fahrzeug als Ackerschlepper bezeichnet und mit einer Streuvorrichtung versehen, die über eine Dreipunktkupplung und einen hydraulischen Oberlenker als Stellglied mit dem Ackerschlepper verbunden ist. Das auszubringende Streumittel ist in einem Vorratsbehälter aufgenommen und wird über eine Dosiereinrichtung an ein zugeordnetes Streuwerk mit mindestens einer Streuscheibe abgegeben. Über die rotierend angetriebene Streuscheibe erfolgt in bekannter Weise die Verteilung des Streumittels auf der landwirtschaftlichen Fläche. Durch die Einstellung der Länge des hydraulischen Oberlenkers kann hierbei die gesamte Streuvorrichtung in eine definierte, mehr oder weniger geneigte Position zum Ackerschlepper gebracht werden, wobei an der Streuvorrichtung auch Vorrichtungen zur Ermittlung des Abstands und/oder der Neigung der Streuscheiben zur Bodenfläche vorhanden sind. Eine elektronische Anzeigevorrichtung dient dabei der Veranschaulichung der Position der Streuscheiben. Zur Verarbeitung der elektronischen Daten und Signale kommt bei dieser Lösung ein Bordcomputer zum Einsatz, der auch den hydraulischen Oberlenker ansteuert, so dass dadurch bereits eine einfache Korrekturmöglichkeit der Position der Streuscheiben möglich wird.

Aus der EP 2 944 171 A1 geht darüber hinaus eine landwirtschaftliche Arbeitsmaschine hervor, die eine Sensoreinrichtung aufweist, wobei diese Sensoreinrichtung ein optischer Sensor, eine Kamera, ein Laser oder ein mit einem Bildaufnahmegerät gekoppelter Mikrowellensensor sein kann. Mittels dieser Sensoreinrichtung wird einerseits eine Abstandsmessung zwischen der Arbeitsmaschine und einem vor der Arbeitsmaschine vorhandenen Pflanzenbestand durchgeführt. Der Mikrowellensensor dient hingegen in Kombination mit einem Bildaufnahmegerät der Ermittlung der Bodenfeuchte, so dass eine an der Arbeitsmaschine vorhandene Steuereinheit, also ein Bordcomputer, in Abhängigkeit von der ermittelten Bodenfeuchte und der von dem Bildaufnahmegerät dargestellten Bodenkontur eine geeignete Saattiefe bestimmen kann. Die Sensoreinrichtung ist gemäß dem Offenbarungsgehalt dieser Druckschrift auch geeignet, zweidimensionale oder dreidimensionale Bildinformationen des umliegenden Geländes darzustellen, um mit den dadurch ermittelten Informationen wenigstens eine Funktion des landwirtschaftlichen Arbeitsgerätes zu steuern.

Darüber hinaus sind unterschiedliche Lösungen bekannt, ein landwirtschaftliches Fahrzeug oder eine an dem landwirtschaftlichen Fahrzeug vorhandene Streuvorrichtung, beziehungsweise dessen Streuscheiben in ihrer Neigung zu verstellen oder eine Höhenkorrektur vorzunehmen. Die DE 32 23 764 A1, die DE 0 197 288 A1 und die DE 3 804 412 A1 betreffen jeweils Lösungen zur Verstellung der Streuscheiben, die jedoch empirisch auf einen bestimmten Winkel eingestellt werden und damit ein konstantes Streubild der Verteilung des Streumittels erzeugen sollen, was jedoch tatsächlich nicht flexibel einem sich ändernden Untergrund angepasst werden kann, wie es beispielsweise bei bergigem Gelände erforderlich wäre, um auch beim Durchfahren einer Senke oder beim Überqueren eines Hügels stets ein gleichmäßiges Streubild zu erreichen.

Einen anderen Weg geht die DE 1 180 562 A1. Hierbei wird der Vorratsbehälter und damit indirekt die unterhalb des Vorratsbehälters angeordnete, wenigstens eine Streuscheibe nach allen Seiten verstellbar ausgeführt, was allerdings manuell erfolgen muss. Hierfür ist zwischen dem Vorratsbehälter und dem landwirtschaftlichen Fahrzeug ein oberer Lenker vorhanden dessen Länge eingestellt werden kann. Das landwirtschaftliche Fahrzeug ist mit dem Vorratsbehälter über eine Dreipunktkupplung verbunden.

Ebenfalls rein mechanische Lösungen zur Einstellung der Position der Streuvorrichtung beschreiben die DE 30 50 904 C3 und die DE 30 33 666 C2. Hierbei ist zwischen Vorratsbehälter und landwirtschaftlichem Fahrzeug eine Messeinrichtung zur manuellen Bestimmung des Höhenabstandes zwischen Boden und Aufhängung des Vorratsbehälters vorhanden. Nach dem Offenbarungsgehalt der DE 30 50 904 C3 kann zusätzlich die Winkelstellung des Vorratsbehälters und damit die Winkelstellung der unterhalb des Vorratsbehälters vorhandenen Streuscheiben ermittelt werden. Während der Ausbringung des Streumittels wird diese Messeinrichtung weggeklappt und damit außer Funktion gesetzt.

Der Erfindung liegt die Aufgabe zugrunde, ein landwirtschaftliches Fahrzeug bereitzustellen, dessen Streuvorrichtung insgesamt flexibel an die Gegebenheiten der Umgebung angepasst werden kann, so dass zu jedem Zeitpunkt ein konstantes Streubild des auszubringenden Streumittels erreicht wird.

Die Erfindung löst diese Aufgabenstellung mit den Merkmalen der Patentansprüche 1 und 12.
Weitere Ausgestaltungen der Erfindung sind Gegenstand der sich anschließenden Unteransprüche.

Ein landwirtschaftliches Fahrzeug mit einer Streuvorrichtung, die ihrerseits einen das auszubringende Streumittel aufnehmenden Vorratsbehälter mit einer Dosiereinrichtung zur einstellbaren Abgabe der Menge des Streumittels an ein der Dosiereinrichtung zugeordnetes Streuwerk aufweist, wobei das Streuwerk mindestens eine angetriebene Streuscheibe umfasst und die Neigung der über eine gelenkartige Kupplung mit dem Fahrzeug mechanisch verbundenen Streuvorrichtung in Relation zu einer horizontalen Ebene mittels wenigstens eines, die Streuvorrichtung mit dem Fahrzeug koppelnden Stellgliedes einstellbar ist, wurde erfindungsgemäß dahin gehend weitergebildet, dass an dem Fahrzeug eine Datenerzeugungseinrichtung zur Erzeugung topografischer Oberflächeninformationen einer mit dem Streumittel zu versehenden, in Fahrtrichtung des Fahrzeugs betrachtet, vor und/oder seitlich neben dem Fahrzeug vorhandenen Oberfläche vorhanden ist, deren Daten mittels eines Bordcomputers zur adaptiven Ansteuerung des Stellgliedes und/oder einer Höheneinstelleinrichtung des Fahrwerkes des Fahrzeuges und/oder des Streuwerkes und/oder der wenigstens einen Streuscheibe nutzbar sind.

Mit der Erfindung wird eine stets gleich bleibende Ausbringung des Streumittels und damit unter verschiedenen Gegebenheiten immer ein gleichmäßiges Streubild erzeugt. Hierzu wird mit Hilfe der Datenerzeugungseinrichtung die Umgebung des landwirtschaftlichen Fahrzeugs topographisch erfasst, um mittels des Bordcomputers die erwähnte adaptive Anpassung vorzunehmen. Mit dieser Lösung wird eine bislang nicht erreichbare Genauigkeit bei der Verteilung des Streumittels erreicht. Der Bordcomputer kann dabei eine Höhenkorrektur des Fahrwerkes des Fahrzeuges oder der Streuvorrichtung selbst vornehmen, einen Neigungsausgleich der Streuvorrichtung oder der einzelnen Streuscheiben oder sogar eine Wurfweitensteuerung über die Veränderung der Drehzahl der Streuscheiben bewirken. Selbstverständlich sind auch Ausführungen denkbar, bei denen der Bordcomputer den Winkel der an den Streuscheiben vorhandenen Wurfschaufeln flexibel verändert beziehungsweise anpasst. Maßgeblich für die Umsetzung der Anpassung der Streuvorrichtung an die Gegebenheiten der Umgebung ist jedoch die eingangs bereits erwähnte Datenerzeugungseinrichtung.

Eine erste Ausgestaltung der Erfindung besteht darin, dass die Datenerzeugungseinrichtung eine Ultraschallsignale, Radarsignale oder optische Signale zur Erzeugung der topografischen Oberflächeninformationen nutzende Sende-Empfangseinheit ist. Neben den erwähnten Ultraschallsignalen sind Radarsignale als bewährte Technik in der Lage, ein sehr genaues Abbild der Topographie des Untergrundes zu schaffen. Ein Radargerät ist ein Gerät, das elektromagnetische Wellen gebündelt als sogenanntes Primärsignal aussendet, die von Objekten reflektierten "Echos" als Sekundärsignal empfängt und nach verschiedenen Kriterien auswertet. So können Informationen über die Objekte gewonnen werden, die im erfindungsgemäßen Sinne verwendbar sind. Die erwähnten optischen Signale können beispielsweise mittels einer Kamera oder unter Einsatz geeigneter CMOS-Sensortechnik erzeugt und genutzt werden.

Das zum Einsatz kommende Stellglied zwischen landwirtschaftlichem Fahrzeug und der Streuvorrichtung ist in bevorzugter Weise ein Hydraulikzylinder. Hydraulikzylinder sind deshalb für die Umsetzung der erfinderische Lösung besonders geeignet, weil sie einen verhältnismäßig einfachen Aufbau aufweisen, in unterschiedlichen Ausführungen erhältlich sind und landwirtschaftliche Fahrzeuge, also beispielsweise Traktoren, in der Regel ohnehin Hydraulikschaltkreise aufweisen, so dass eine Kopplung mit diesen vorhandenen Aggregaten problemlos möglich ist. Die Verbindung zwischen dem landwirtschaftlichen Fahrzeug und dem Stellglied erfolgt dabei in an sich bekannter Weise über eine so genannte SVK-Kupplung, bei der es sich um eine genormte Verbindung für Hydraulikleitungen handelt. Selbstverständlich kann auch die Streuvorrichtung das Stellglied, also den Hydraulikzylinder, ansteuern. In diesem Fall ist an der Streuvorrichtung eine eigene Hydrauliksteuereinheit vorzusehen, die wiederum mit den Hydraulikanschlüssen des landwirtschaftlichen Fahrzeugs verbunden wird.

Um dem Nutzer beziehungsweise Anwender der Erfindung die erforderlichen Arbeitsschritte zur Ausbringung des Streumittels möglichst weit gehend zu erleichtern, ist es eine wesentliche Aufgabe, manuelle Tätigkeiten zu reduzieren oder insgesamt zu vermeiden. Hierzu wird vorgeschlagen, die adaptive Ansteuerung des Stellgliedes und/oder der Höheneinstelleinrichtung des Fahrwerkes des Fahrzeuges und/oder des Streuwerkes und/oder der wenigstens einen Streuscheibe zu automatisieren. Anders ausgedrückt kann der Bordcomputer auch dazu genutzt werden, das Stellglied und/oder eine Höheneinstelleinrichtung des Fahrwerkes des Fahrzeuges und/oder des Streuwerkes und/oder der wenigstens einen Streuscheibe anzusteuern und in ihrer Position zu verändern.
Beispielhaft sei an dieser Stelle auf das "Traktor-Implement-Management" hingewiesen, das komplette Funktionen des landwirtschaftlichen Fahrzeugs, also beispielsweise eines Traktors, durch einen Bordcomputer steuert. Beispielsweise ist es denkbar, dass die Vortriebsgeschwindigkeit eines Traktors durch den Bordcomputer reguliert wird. Auch dadurch kann eine Optimierung des Streubildes erreicht werden. Manuelle Tätigkeiten werden reduziert und die Bearbeitung des Untergrundes insgesamt automatisiert.

Unabhängig vom Automatisierungsgrad ist es für die Handhabung der vorliegenden Erfindung hilfreich, wenn das Fahrzeug eine Anzeigeeinheit zur Visualisierung der eingestellten Parameter und/oder zur Veranschaulichung von Einstellhinweisen der Streuvorrichtung und/oder des Streuwerks und/oder der einzelnen Streuscheibe(n) aufweist. Diese Anzeigeeinheit kann beispielsweise als ein Display oder Bildschirm ausgeführt sein, wobei selbstverständlich auch berührungsempfindliche Bildschirme, die gleichzeitig eine Bedienfunktion aufweisen, von Vorteil sind. Derartige berührungsempfindliche Bildschirme werden gemeinhin auch als "touchscreen" bezeichnet und verfügen in diesem Fall auch über Eingabemöglichkeiten, also beispielsweise über eine virtuelle Tastatur.

Zur Kontrolle der eingestellten Neigung der Streuvorrichtung und/oder des Streuwerkes und/oder der wenigstens einen Streuscheibe ist es hilfreich, wenn an der Streuvorrichtung mindestens ein, an den Bordcomputer elektronische Daten übermittelnder, die Neigung in Relation zu einer horizontalen Ebene erfassender Neigungssensor vorhanden ist. Bevorzugt wird ein derartiger Neigungssensor zur Ermittlung der Position der Streuvorrichtung verwendet.

Ebenso wie das Fahrwerk des landwirtschaftlichen Fahrzeugs, kann gemäß einer speziellen Ausgestaltung der Erfindung auch das Streuwerk und/oder die wenigstens eine Streuscheibe in ihrer Höhe einstellbar ausgeführt sein. Mit derartigen Verstellensmöglichkeiten lassen sich ebenfalls unterschiedliche Streubilder erzeugen, die insgesamt eine Optimierung der Verteilung des Streumittels darstellen.

Analog zu der zuvor bereits erwähnten Neigungsmessung besteht gemäß einer Weiterbildung der Erfindung auch oder ergänzend die Möglichkeit, an dem Streuwerk mindestens einen, an den Bordcomputer elektronische Daten übermittelnden, den Höhenabstand zwischen dem Streuwerk und der geografischen Oberfläche erfassenden Höhensensor vorzusehen, dessen Daten zur Höheneinstellung des Fahrwerks und/oder des Streuwerkes und/oder der wenigstens einen Streuscheibe nutzbar sind. Der Einsatz des Höhensensors ist ebenfalls ein Schritt in Richtung vollständiger Automatisierung.

Als Höhensensor kann dabei in bevorzugter Weise ein Ultraschallsignale verarbeitender Abstandssensor Verwendung finden.

Wie dies zuvor bereits angedeutet wurde, weist das Streuwerk bevorzugt mehrere Streuscheiben auf, von denen wenigstens eine Streuscheibe mittels der im Bordcomputer verarbeiteten Topografiedaten in ihrer Neigung in Relation zu einer horizontalen Ebene verstellbar ausgeführt ist. Wird nur eine Streuscheibe oder werden nur einzelne Streuscheiben in ihrer Neigung verstellbar ausgeführt, so kann dadurch eine gezielte Überdeckung der flächigen Streubilder sämtlicher Streuscheiben erreicht und somit ein homogenes Streubild erzeugt werden.

Eine alternative oder ergänzende Lösung hierzu besteht gemäß einem weiterführenden Vorschlag nach der Erfindung darin, dass das Streuwerk mehrere Streuscheiben aufweist, von denen wenigstens eine Streuscheibe mittels der im Bordcomputer verarbeiteten Topografiedaten in ihrer Geschwindigkeit verstellbar ausgeführt ist. Durch die Änderung der Geschwindigkeit einer Streuscheibe wird die Wurfweite des Streumittels ebenfalls verändert, wobei sich die Wurfweite reduziert, wenn die Geschwindigkeit der Streuscheibe verringert wird.

Ein landwirtschaftliches Fahrzeug mit einer Streuvorrichtung, die ihrerseits einen das auszubringende Streumittel aufnehmenden Vorratsbehälter mit einer Dosiereinrichtung zur einstellbaren Abgabe der Menge des Streumittels an ein der Dosiereinrichtung zugeordnetes Streuwerk aufweist, wobei das Streuwerk mindestens eine angetriebene Streuscheibe umfasst und die Neigung der über eine gelenkartige Kupplung mit dem Fahrzeug mechanisch verbundenen Streuvorrichtung in Relation zu einer horizontalen Ebene mittels wenigstens eines, die Streuvorrichtung mit dem Fahrzeug koppelnden Stellgliedes einstellbar ist, wurde erfindungsgemäß dahingehend weitergebildet, dass zwischen dem Fahrzeug und der Streuvorrichtung eine Kupplung als lösbare Verbindung vorhanden ist, wobei, bezogen auf die Fahrtrichtung des Fahrzeugs, rückseitig des Fahrzeugs eine Deichsel endseitig ein erstes Kupplungselement aufweist, das mit einem weiteren Kupplungselement an der Streuvorrichtung gelenkartig verbunden ist.

Dabei ist zu beachten, dass die gelenkartige Verbindung über die Kupplung zu einer optimalen Anpassung der als gezogener Anhänger ausgeführten Streuvorrichtung an unebenes Gelände führt, sodass sich bereits durch eine derartige Maßnahme ein optimiertes Streubild des auszubringenden Streumittels ergibt.
Natürlich ist auch eine Kombination dieser Lösung mit den zuvor beschriebenen Merkmalen eines landwirtschaftlichen Fahrzeugs möglich. So kann auch dieses landwirtschaftliche Fahrzeug eine Datenerzeugungseinrichtung zur Erzeugung topografischer Oberflächeninformationen aufweisen.

Gemäß einer vorteilhaften Weiterbildung ist das Kupplungselement der Streuvorrichtung an einem Chassis der Streuvorrichtung angeordnet, sodass die bauliche Ausführung der Kupplung insgesamt sehr einfach ist.

Die gelenkige Ausführung der Kupplung wird bei dem hier betroffenen landwirtschaftlichen Fahrzeug in bevorzugter Weise dadurch erreicht, dass zwischen den Kupplungselementen ein Schwenkgelenk und mindestens ein Federelement vorhanden sind, wobei das Federelement nicht nur eine gewisse Elastizität in die Kupplungsverbindung bringt, sondern darüber hinaus auch eine Rückstellbewegung realisieren kann.

Bei dem Stellglied handelt es sich vorliegend um einen zwischen der Deichsel und der Streuvorrichtung angeordneten Hydraulikzylinder, über dessen Ansteuerung die Neigung der Streuvorrichtung bezogen auf eine horizontale Ebene einstellbar ist.

Die Erfindung wird nachfolgend anhand der beigefügten Zeichnungen näher erläutert. Die gezeigten Ausführungsbeispiele stellen dabei keine Einschränkung auf die dargestellten Varianten dar, sondern dienen lediglich der Erläuterung eines Prinzips der Erfindung.
Gleiche oder gleichartige Bauteile werden stets mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.
Hierbei zeigen
- Fig. 1: ein landwirtschaftliches Fahrzeug mit einer Streuvorrichtung als Anhänger in einer ersten Position der Streuvorrichtung,
- Fig. 2: das landwirtschaftliche Fahrzeug aus Figur 1 mit einer geneigten Position der Streuvorrichtung,
- Fig. 3: ein landwirtschaftliches Fahrzeug mit einer daran montierten Streuvorrichtung in einer annähernd horizontalen Position der Streuvorrichtung,
- Fig. 4: ein landwirtschaftliches Fahrzeug mit einer Streuvorrichtung gemäß Figur 3 mit einer geneigten Position der Streuvorrichtung
- Fig. 5: eine rückseitige Ansicht des in den Figuren 3 und 4 gezeigten Fahrzeugs in einem Gelände mit einer einseitigen Neigung
und
- Fig. 6: ein Prinzipschaltbild der Erfindung.

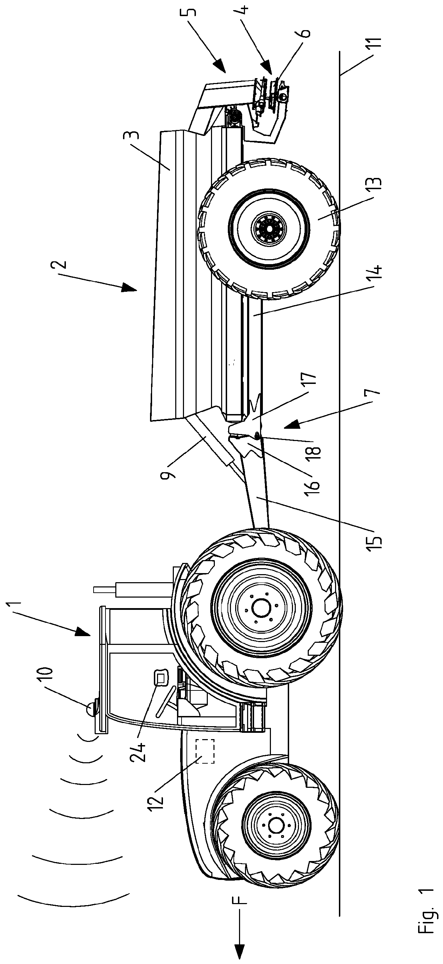

Die Fig. 1 zeigt ein landwirtschaftliches Fahrzeug 1, bei dem es sich vorliegend um einen herkömmlichen Traktor handelt. Eine Streuvorrichtung 2 bildet hierbei einen Anhänger des Fahrzeugs 1, der zur Fortbewegung von dem Fahrzeug 1 gezogen wird und hierfür Räder 13 aufweist. Die Verbindung zwischen dem Fahrzeug 1 und der Streuvorrichtung 2 besteht aus einer Kupplung 7, wobei, bezogen auf die Fahrtrichtung F des Fahrzeugs 1, rückseitig des Fahrzeugs 1 eine Deichsel 15 angeordnet ist, die endseitig ein erstes Kupplungselement 16 aufweist, das mit einem weiteren Kupplungselement 17 an der Streuvorrichtung 2 gelenkartig verbunden ist. Das Kupplungselement 17 der Streuvorrichtung 2 ist an einem Chassis 14 der Streuvorrichtung 2 angeordnet. Das zwischen den Kupplungselementen 16 und 17 vorhandene Schwenkgelenk 18 verbindet hierbei das Fahrzeug 1 gelenkartig mit der als Anhänger gestalteten Streuvorrichtung 2, die in dem in Figur 1 gezeigten Beispiel eine nahezu horizontale Ausrichtung aufweist. Im Bereich der Kupplung 7 ist ferner ein Hydraulikzylinder 9 als Stellglied zwischen der Deichsel 15 und der Streuvorrichtung 2 angeordnet, so dass über eine Ansteuerung des Hydraulikzylinders 9 die Neigung der Streuvorrichtung 2 bezogen auf eine horizontale Ebene eingestellt werden kann.
Die Streuvorrichtung 2 weist ihrerseits einen Vorratsbehälter 3 auf, in dem das auf dem Untergrund 11 zu verteilende Streumittel aufgenommen ist. Bezogen auf die Fahrtrichtung F ist rückseitig an der Streuvorrichtung 2 ferner eine Dosiereinrichtung 4 zur einstellbaren Abgabe der Menge des Streumittels an ein der Dosiereinrichtung 4 zugeordnetes Streuwerk 5 vorhanden. Das Streuwerk 5 umfasst mindestens eine angetriebene Streuscheibe 6, über die das Streumittel an die Umgebung abgegeben wird. Die Streuscheibe 6 ist in der Regel rotierend gelagert und wird angetrieben.
Als erfindungsgemäße Besonderheit ist vorliegend der Umstand anzusehen, dass das Fahrzeug 1 eine Datenerzeugungseinrichtung 10 zur Ermittlung topographischer Oberflächendaten in Fahrtrichtung vor und/oder seitlich des Fahrzeugs 1 aufweist. Bei dem in Figur 1 gezeigten Beispiel befindet sich die Datenerzeugungseinrichtung 10 auf dem Dach des Fahrzeugs 1, wobei dies nur beispielhaft ist und andere Anbringungsmöglichkeiten nicht ausgeschlossen sind. Zur Verarbeitung der ermittelten Daten sowie zur Ansteuerung verschiedener Funktionen, wie beispielsweise der Ansteuerung des Hydraulikzylinders 9, dient ein Bordcomputer 12. Darüber hinaus weist das Fahrzeug 1 im vorliegenden Fall auch eine Anzeigeeinheit 24 auf, die der Veranschaulichung der eingestellten Werte beziehungsweise zur Visualisierung von Informationen über mögliche Verbesserungen der Einstellungen und gegebenenfalls der Angabe von Korrekturwerten dient. In einem bevorzugten Fall handelt es sich bei der Anzeigeeinheit 24 um ein berührungsempfindliches Display, also einen touchscreen, über den bevorzugt auch Eingaben vorgenommen werden können, wenn er eine virtuelle Tastatur aufweist.

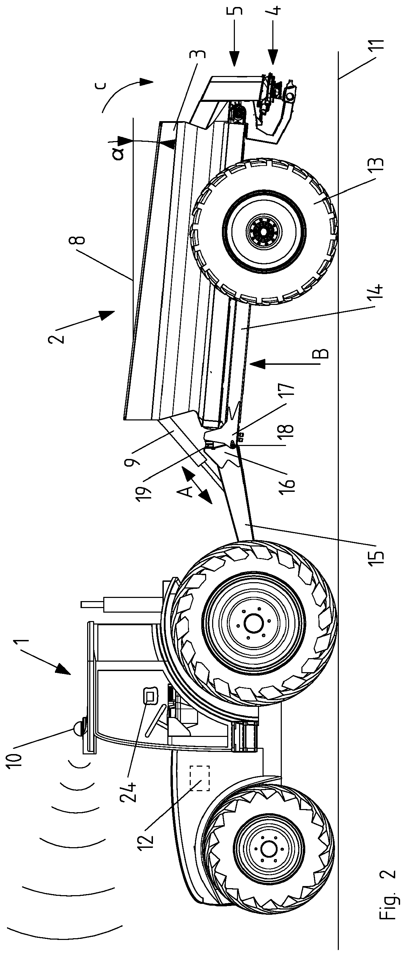

Aus der Fig. 2 geht das landwirtschaftliche Fahrzeug 1 aus Fig. 1 mit einer geneigten Position der Streuvorrichtung 2 hervor. Im Unterschied zu der Darstellung in Fig. 1 wurde hierbei anhand der von der Datenerzeugungseinrichtung 10 ermittelten Oberflächendaten eine Bewegung des Hydraulikzylinders 9 eingeleitet, die einer Bewegung des Hydraulikzylinders 9 in Richtung des Pfeils A entspricht. Anders ausgedrückt wird hierbei indirekt eine Verstellung des Streuwerks 5 und damit der Streuscheiben 6 durch eine Neigungsveränderung der gesamten Streuvorrichtung 2 bewirkt, was durch die Veränderung der Länge des Hydraulikzylinders 9 erfolgt. Dabei wird die Kupplung 7 um das Schwenkgelenk 18 verschwenkt, so dass die Streuvorrichtung 2 eine Neigung um den Winkel α in Bezug auf eine horizontale Ebene 8 vollzieht. Mit anderen Worten ausgedrückt, wird die Neigung in Richtung des Pfeils C in Figur 2 bewirkt, was das Anheben der Streuvorrichtung 2 im Bereich der Kupplung 7 in Richtung des Pfeils B nach sich zieht. Deutlicher, als sie dies in der Figur 1 erkennbar war, wird hieraus auch deutlich, dass die Kupplung 7 zur Erzielung einer Rückstellbewegung oberhalb des Schwenkgelenkes 18 ein Federelement 19 aufweist. Genutzt wird hierbei das Prinzip einer "Knickdeichsel". Die Streuvorrichtung 2 befindet sich durch die Ausführungsvariante in den Figuren 1 und 2 jederzeit in einer Position, die die Erzeugung eines optimalen Streubildes des auszubringenden Streumittels ermöglicht. Mit Hilfe des Bordcomputers 12 und eines Neigungssensors kann der Einstellvorgang weitgehend automatisiert werden. Die Lösung ist jedoch auch geeignet, andere Störgrößen, wie beispielsweise einen abnehmenden Reifenluftdruck und/oder die Veränderung der Höhenlage der Streuvorrichtung 2 über dem Untergrund oder über einem Pflanzenbestand durch die Reduzierung des bereits verteilten Streumittels, zu kompensieren. Unterstützend kann hierbei beispielsweise ein Ultraschallsensor zur Ermittlung des Höhenabstandes zwischen dem Streuwerk 5 und dem Untergrund oder dem Pflanzenbestand dienen.

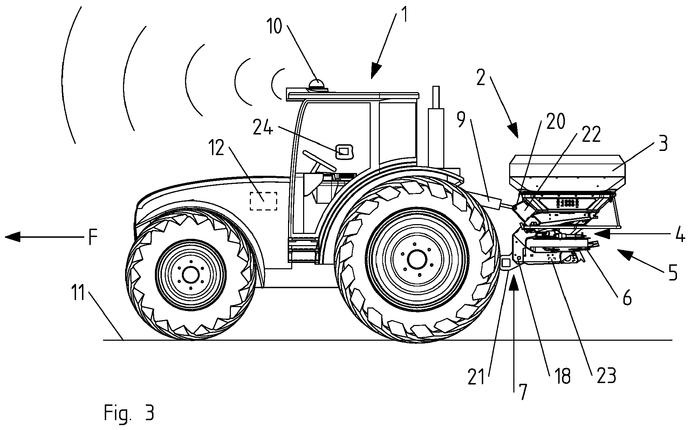

Eine andere Ausführungsvariante eines landwirtschaftlichen Fahrzeugs 1 mit einer Streuvorrichtung 2 zeigt die Fig. 3. Hierbei ist die Streuvorrichtung 2 unmittelbar an der Rückseite des Fahrzeugs 1 montiert. Es handelt sich folglich um eine Anbaustreuvorrichtung 2. Zur schwenkbaren Verbindung zwischen dem als Traktor dargestellten Fahrzeug 1 und der Streuvorrichtung 2 dient zunächst eine Kupplung 7 die aus einem fahrzeugseitigen Tragarm 21 besteht, der über ein Schwenkgelenk 18 mit der Streuvorrichtung 2 verbunden ist. Als Tragarm 21 kann auch im vorliegenden Fall eine Deichsel dienen. Oberhalb der Kupplung 7 ist die Streuvorrichtung 2 über einen an der Streuvorrichtung 2 vorhandenen Flansch 22 mit dem Hydraulikzylinder 9 des Fahrzeugs 1 gekoppelt, wobei die Verbindung zwischen Flansch 22 und Hydraulikzylinder 9 aus einem Drehgelenk 20 besteht. Eine weitere Besonderheit dieser Ausführungsvariante besteht darin, dass unterhalb der Streuvorrichtung 2 ein Neigung- und/oder Höhensensor 23 vorhanden ist, der als Höhensensor den Abstand zum Untergrund oder zu dem mit dem Streumittel zu versorgenden Pflanzenbestand ermittelt beziehungsweise als Neigungssensor die Neigung der Streuvorrichtung 2 in Bezug auf eine horizontale Ebene 8 bestimmt.

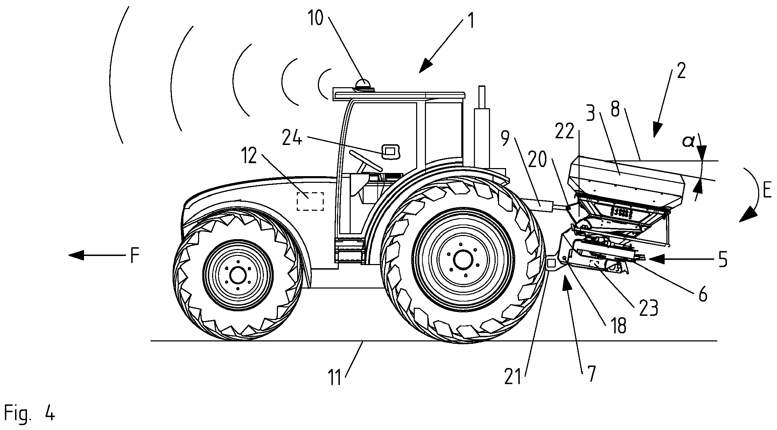

Eine derartig geneigte Position der Streuvorrichtung 2 geht aus der Darstellung in Fig. 4 hervor. Hierbei wurde der Hydraulikzylinder 9 in Richtung des Pfeils D auseinander bewegt, so dass eine Schwenkbewegung der Streuvorrichtung 2 in Richtung des Pfeils E um das Schwenkgelenk 18 der Kupplung 7 erfolgt. In der Figur 4 ist zur Veranschaulichung der Neigung der Streuvorrichtung 2 der Neigungswinkel α eingezeichnet, der die Neigung der Streuvorrichtung 2 in Bezug zu der horizontalen Ebene 8 darstellt. Das von dem Neigungssensor 23 hierauf bezogene Signal wird im Bordcomputer 12 verarbeitet und mit Hilfe der im Fahrzeug 1 vorhandenen Anzeigeeinheit 24 für den Fahrer sichtbar angezeigt. Falls dies erforderlich ist, können hier auch mögliche Korrekturwerte angegeben werden, um eine weitere Optimierung des Streubildes des zu verteilenden Streumittels zu erreichen.

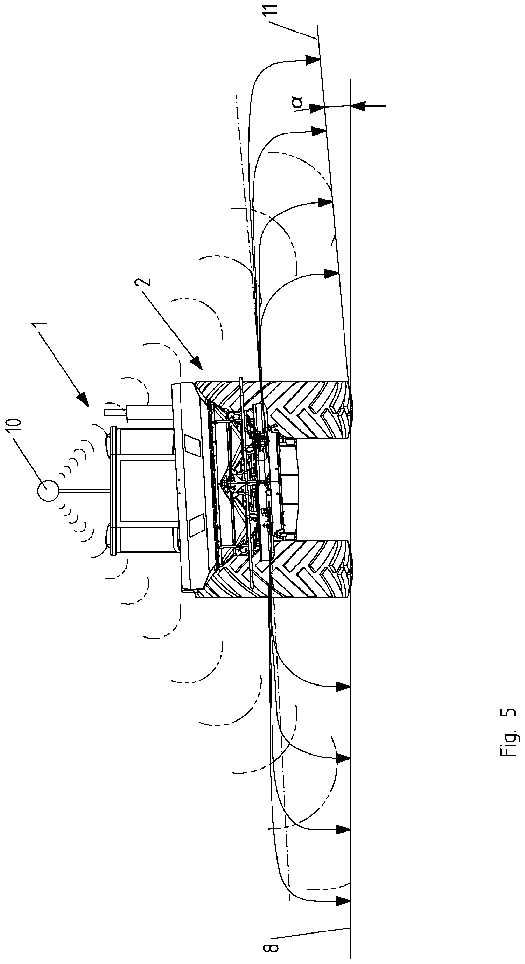

In der Fig. 5 ist eine rückseitige Ansicht des in den Figuren 3 und 4 gezeigten Fahrzeugs 1 in einem Gelände mit einer einseitigen Neigung veranschaulicht. Der Untergrund 11 weist rechts des mit der daran montierten Streuvorrichtung 2 versehenen Fahrzeugs 1 einen Anstieg um den Winkel α zu einer Horizontalen Ebene 8 auf. Um eben diesen Betrag wird dabei die Streuvorrichtung 2 geneigt, sodass hier ein Ausgleich erfolgt und weiterhin ein optimiertes Streubild des zu verteilenden Streumittels erreicht wird, obwohl der Untergrund unter dem Fahrzeug 1 beidseitig unterschiedliche Höhenniveaus aufweist.

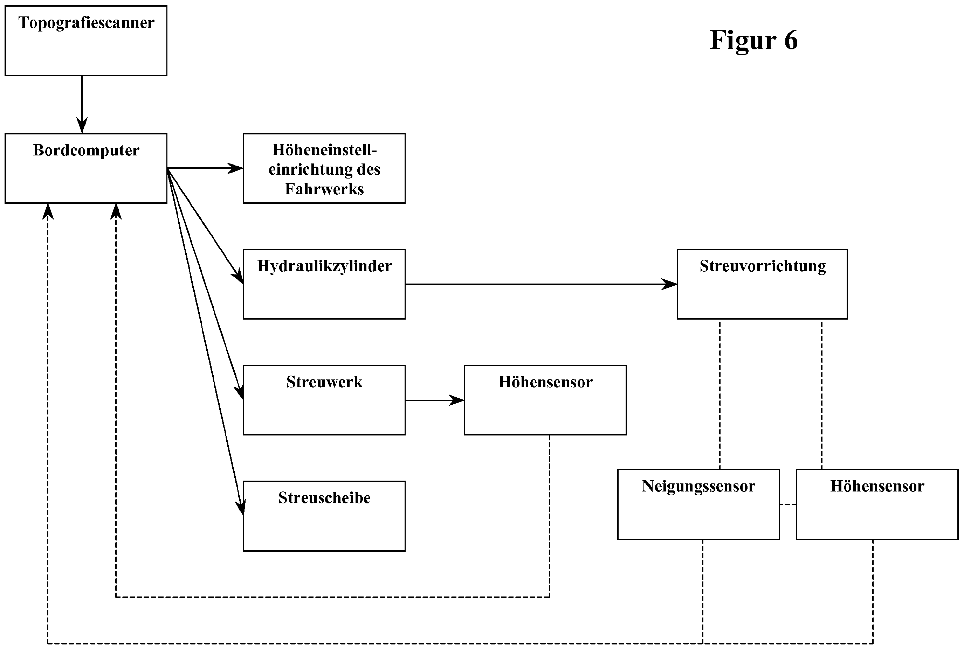

Die Fig. 6 zeigt schließlich noch ein einfaches Prinzipschaltbild der Funktionsweise der Erfindung. Sämtliche Einstellungen der Streuvorrichtung 2 und damit des Streuwerkes 5 erfolgen in Abhängigkeit der von der Datenerzeugungseinrichtung 10 ermittelten topographischen Oberflächendaten der Umgebung des Fahrzeugs 1. Die Oberflächendaten werden in dem Bordcomputer 12 verarbeitet, der auch für die Ansteuerung der einzelnen Aggregate zuständig ist. So nimmt der Bordcomputer 12 zum Beispiel Einfluss auf die Höheneinstelleinrichtung des Fahrwerkes des Fahrzeuges 1 und/oder der Streuvorrichtung 2, auf das Stellglied, welches in den zuvor beschriebenen Beispielen jeweils als Hydraulikzylinder 9 ausgeführt ist, auf das Streuwerk 5 beziehungsweise auf die mindestens eine Streuscheibe 6, die in ihrer Geschwindigkeit oder in Ihrer Winkellage eingestellt werden können. Die Einstellung der Streuscheibe 6 beziehungsweise des Streuwerkes 5 kann hierbei in der zuvor beschriebenen Weise direkt oder indirekt über die Verstellung der Position der Streuvorrichtung 2 erfolgen. Darüber hinaus ist in der Figur 6 die Möglichkeit angegeben, beispielsweise über einen mit dem Streuwerk 5 gekoppelten Höhensensor den Höhenabstand über dem Untergrund 11 beziehungsweise über einem Pflanzenbestand zu ermitteln und die auf diese Weise bestimmten Daten innerhalb des Bordcomputers 12 zu verarbeiten. Eine alternative oder ergänzende Möglichkeit besteht darüber hinaus darin, über einen Neigungssensor an der Streuvorrichtung 2 die aktuelle Position der Streuvorrichtung 2 in Bezug auf eine horizontale Ebene 8 zu bestimmen und mittels des Bordcomputers 12 gegebenenfalls Korrekturen vorzunehmen, um jederzeit ein optimales Streubild des auszubringenden Streumittels zu erzielen. Gleiches gilt auch für einen an der Streuvorrichtung vorhandenen Höhensensor.

### BEZUGSZEICHENLISTE:

- 1: Fahrzeug
- 2: Streuvorrichtung
- 3: Vorratsbehälter
- 4: Dosiereinrichtung
- 5: Streuwerk
- 6: Streuscheibe
- 7: Kupplung
- 8: horizontale Ebene
- 9: Hydraulikzylinder
- 10: Datenerzeugungseinrichtung
- 11: Untergrund
- 12: Bordcomputer
- 13: Räder
- 14: Chassis
- 15: Deichsel
- 16: erstes Kupplungselement
- 17: zweites Kupplungselement
- 18: Schwenkgelenk
- 19: Federelement
- 20: Drehgelenk
- 21: Tragarm
- 22: Flansch
- 23: Neigungs- oder Höhensensor
- 24: Anzeigeeinheit

- α: Winkel
- F: Fahrtrichtung
- A, B, C, D, E: Bewegungsrichtungen

## Patentansprüche

1. Landwirtschaftliches Fahrzeug (1) mit einer Streuvorrichtung (2), die ihrerseits einen das auszubringende Streumittel aufnehmenden Vorratsbehälter (3) mit einer Dosiereinrichtung (4) zur einstellbaren Abgabe der Menge des Streumittels an ein der Dosiereinrichtung (4) zugeordnetes Streuwerk (5) aufweist, wobei das Streuwerk (5) mindestens eine angetriebene Streuscheibe (6) umfasst und die Neigung (a) der über eine gelenkartige Kupplung (7) mit dem Fahrzeug (1) mechanisch verbundenen Streuvorrichtung (2) in Relation zu einer horizontalen Ebene (8) mittels wenigstens eines, die Streuvorrichtung (2) mit dem Fahrzeug (1) koppelnden Stellgliedes (9) einstellbar ist,
**dadurch gekennzeichnet, dass**
an dem Fahrzeug (1) eine Datenerzeugungseinrichtung (10) zur Erzeugung topografischer Oberflächeninformationen einer mit dem Streumittel zu versehenden, in Fahrtrichtung des Fahrzeugs (1) betrachtet, vor und/oder seitlich neben dem Fahrzeug (1) vorhandenen Oberfläche (11) vorhanden ist, deren Daten mittels eines Bordcomputers (12) zur adaptiven Ansteuerung des Stellgliedes (9) und/oder einer Höheneinstelleinrichtung des Fahrwerkes des Fahrzeuges (1) und/oder des Streuwerkes (5) und/oder der wenigstens einen Streuscheibe (6) nutzbar sind.

2. Landwirtschaftliches Fahrzeug nach Anspruch 1,
**dadurch gekennzeichnet, dass**
die Datenerzeugungseinrichtung (10) eine Ultraschallsignale, Radarsignale oder optische Signale zur Erzeugung der topografischen Oberflächeninformationen nutzende Sende-Empfangseinheit ist.

3. Landwirtschaftliches Fahrzeug nach Anspruch 1 oder 2,
**dadurch gekennzeichnet, dass**
das Stellglied (9) ein Hydraulikzylinder ist.

4. Landwirtschaftliches Fahrzeug nach einem der vorstehend genannten Ansprüche,
**dadurch gekennzeichnet, dass**
die adaptive Ansteuerung des Stellgliedes (9) und/oder der Höheneinstelleinrichtung des Fahrwerkes des Fahrzeuges (1) und/oder des Streuwerkes (5) und/oder der wenigstens einen Streuscheibe (6) automatisiert ist.

5. Landwirtschaftliches Fahrzeug nach einem der vorstehend genannten Ansprüche,
**dadurch gekennzeichnet, dass**
das Fahrzeug (1) eine Anzeigeeinheit zur Visualisierung der eingestellten Parameter und/oder zur Veranschaulichung von Einstellhinweisen der Streuvorrichtung (2) und/oder des Streuwerks (5) und/oder der einzelnen Streuscheibe(n) (6) aufweist und die Anzeigeeinheit (24) vorzugsweise als ein Display oder Bildschirm ausgeführt ist.

6. Landwirtschaftliches Fahrzeug nach einem der vorstehend genannten Ansprüche,
**dadurch gekennzeichnet, dass**
an der Streuvorrichtung (2) mindestens ein, an den Bordcomputer (12) elektronische Daten übermittelnder, die Neigung der Streuvorrichtung (2) in Relation zu einer horizontalen Ebene (8) erfassender Neigungssensor vorhanden ist.

7. Landwirtschaftliches Fahrzeug nach einem der vorstehend genannten Ansprüche,
**dadurch gekennzeichnet, dass**
das Streuwerk (5) und/oder die wenigstens eine Streuscheibe (6) in ihrer Höhe einstellbar ausgeführt ist beziehungsweise sind.

8. Landwirtschaftliches Fahrzeug nach einem der vorstehend genannten Ansprüche,
**dadurch gekennzeichnet, dass**
an dem Streuwerk (5) mindestens ein, an den Bordcomputer (12) elektronische Daten übermittelnder, den Höhenabstand zwischen dem Streuwerk (5) und der geografischen Oberfläche (11) erfassender Höhensensor vorhanden ist, dessen Daten zur Höheneinstellung des Streuwerkes (5) und/oder der wenigstens einen Streuscheibe (6) nutzbar sind.

9. Landwirtschaftliches Fahrzeug nach Anspruch 7,
**dadurch gekennzeichnet, dass**
der Ultraschallsignale verarbeitende Höhensensor ein Abstandssensor ist.

10. Landwirtschaftliches Fahrzeug nach einem der vorstehend genannten Ansprüche,
**dadurch gekennzeichnet, dass**
das Streuwerk (5) mehrere Streuscheiben aufweist, von denen wenigstens eine Streuscheibe (6) mittels der im Bordcomputer (12) verarbeiteten Topografiedaten in ihrer Neigung in Relation zu einer horizontalen Ebene (8) verstellbar ausgeführt ist.

11. Landwirtschaftliches Fahrzeug nach einem der vorstehend genannten Ansprüche,
**dadurch gekennzeichnet, dass**
das Streuwerk (5) mehrere Streuscheiben aufweist, von denen wenigstens eine Streuscheibe (6) mittels der im Bordcomputer (12) verarbeiteten Topografiedaten in ihrer Geschwindigkeit verstellbar ausgeführt ist.

12. Landwirtschaftliches Fahrzeug (1) mit einer Streuvorrichtung (2), die ihrerseits einen das auszubringende Streumittel aufnehmenden Vorratsbehälter (3) mit einer Dosiereinrichtung (4) zur einstellbaren Abgabe der Menge des Streumittels an ein der Dosiereinrichtung (4) zugeordnetes Streuwerk (5) aufweist, wobei das Streuwerk (5) mindestens eine angetriebene Streuscheibe (6) umfasst und die Neigung (a) der über eine gelenkartige Kupplung (7) mit dem Fahrzeug (1) mechanisch verbundenen Streuvorrichtung (2) in Relation zu einer horizontalen Ebene (8) mittels wenigstens eines, die Streuvorrichtung (2) mit dem Fahrzeug (1) koppelnden Stellgliedes (9) einstellbar ist,
**dadurch gekennzeichnet, dass**
zwischen dem Fahrzeug (1) und der Streuvorrichtung (2) eine Kupplung (7) als lösbare Verbindung vorhanden ist, wobei, bezogen auf die Fahrtrichtung (F) des Fahrzeugs (1), rückseitig des Fahrzeugs (1) eine Deichsel (15) endseitig ein erstes Kupplungselement (16) aufweist, das mit einem weiteren Kupplungselement (17) an der Streuvorrichtung (2) gelenkartig verbunden ist.

13. Landwirtschaftliches Fahrzeug nach Anspruch 12,
**dadurch gekennzeichnet, dass**
das Kupplungselement (17) der Streuvorrichtung (2) an einem Chassis (14) der Streuvorrichtung (2) angeordnet ist.

14. Landwirtschaftliches Fahrzeug nach Anspruch 12 oder 13,
**dadurch gekennzeichnet, dass**
zwischen den Kupplungselementen (16 und 17) ein Schwenkgelenk (18) und mindestens ein Federelement (19) vorhanden sind.

15. Landwirtschaftliches Fahrzeug nach einem der Ansprüche 12 bis 14,
**dadurch gekennzeichnet, dass**
das Stellglied (9) ein zwischen der Deichsel (15) und der Streuvorrichtung (2) angeordneter Hydraulikzylinder ist, über dessen Ansteuerung die Neigung der Streuvorrichtung (2) bezogen auf eine horizontale Ebene einstellbar ist.
